# EUROPEAN PATENT APPLICATION

(11) **EP 0 894 983 A2**
(43) Date of publication of application: **03.02.1999**
(21) Application number: 98305457.8
(22) Date of filing: 09.07.1998
(51) Int. Cl.: F15B 15/28, F16B 2/06

(54) **Sensor mounting device in fluid pressure clylinder**

(30) Priority: 30.07.1997 JP 219208/97
(71) Applicant: SMC CORPORATION, Minato-ku Tokyo 105 (JP)
(72) Inventor: Nagato, Yasuhiro, Yawara-mura, Tsukuba-gun, Ibaraki (JP)
(74) Representative: Findlay, Alice Rosemary

(57) **Abstract**

A sensor mounting device consists of a sensor 10 and a fixture 16 for mounting the sensor 10 on a cylinder tube 12.

The fixture 16 has a fitting groove 17 in which the cylinder tube 12 is fitted; first setting screws 20 for fixing the fixture 16 to the cylinder tube; and a sensor groove 18 in which the sensor 10 is mounted.

## Description

The present invention relates to a sensor mounting device for mounting a position detection sensor on a circular cylinder tube of a fluid pressure cylinder.

It is known to mount a position detection sensor such as a magnetic proximity switch on a fluid pressure cylinder to detect the operating position of a piston.

In one known arrangement for mounting a sensor on the cylinder, a rail having a sensor mounting groove is passed between head and rod covers that cover the respective ends of a cylinder tube, and both ends of the rail are fixed to the respective covers using set screws or the rail is directly attached to the cylinder tube using adhesive tape or adhesive. The sensor is then mounted in the mounting groove in the rail.

If such a method is used to mount the sensor, the mounting position of the sensor can be adjusted along the rail in the axial direction of the cylinder tube but cannot be adjusted easily in the circumferential direction of the cylinder tube.

If, however, the installation position of the cylinder is changed, the mounting position of the sensor may need to be changed in the circumferential direction of the cylinder tube, depending on the space available around the cylinder or the direction of the sensor.

To solve this problem and allow the axial and circumferential mounting positions of the sensor to be changed, a method has been proposed in which the sensor is mounted on the circular cylinder tube using a mounting band.

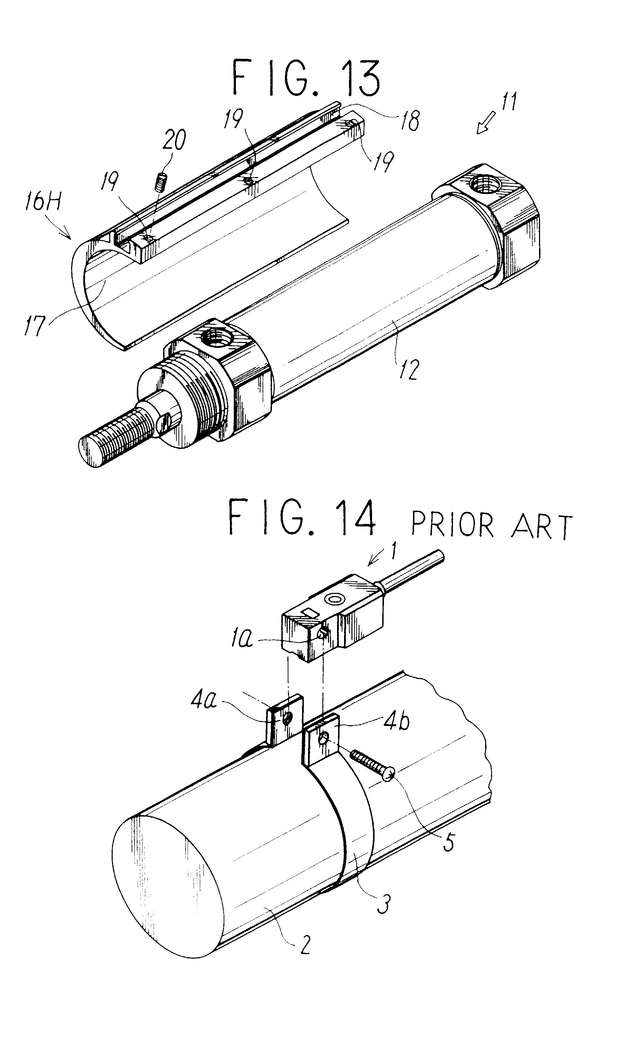

FIG. 14 shows the mounting of a sensor 1 using a mounting band 3. The mounting band 3 generally surrounds the outer circumferential surface of a cylinder tube 2, and the sensor 1 is sandwiched between sandwiching pieces 4a and 4b provided at the respective ends of the mounting band 3. A setting screw 5 that passes through a through-hole la provided in the sensor 1 is used to tighten the sandwiching pieces 4a and 4b in order to mount the mounting band 3 and sensor 1 on the cylinder tube 2. In this case, by loosening the setting screw 5 to release the mounting band 3, the mounting position of the sensor 1 can be adjusted in both circumferential and axial directions of the cylinder tube 2.

In mounting the sensor 1 using the mounting band 3, the common setting screw 5 is used to tighten the mounting band 3 against the cylinder tube 2 while mounting the sensor 1. Therefore, to adjust the mounting position of the sensor 1, the mounting of the sensor 1 and the tightening of the mounting band 3 must be simultaneously released. In addition, since the mounting band is normally short enough to attach the sensor 1 to the outer surface of the cylinder tube 2, if the setting screw is only slightly loosened, so that the tip of the setting screw 5 is not removed from the tapped holes in the sandwiching pieces 4a, the mounting band 3 and sensor 1 remain in contact with the outer surface of the cylinder tube 2 and the mounting band 3 cannot be moved simply and smoothly in the axial or circumferential direction. As a result, the setting screw 5 must be completely removed to separate the sensor 1 and the sensor position adjustment operation is cumbersome.

The main technical object of this invention is to provide a sensor mounting device that can simply and reliably mount a sensor on a cylinder tube and allows simple adjustment of the mounting position of the sensor in the cylindrical direction of the cylinder tube.

Another technical object of this invention is to provide a sensor mounting device in which the sensor and a fixture for mounting the sensor on the cylinder tube are fixed using individual setting screws, so that the mounting position of the sensor can be simply adjusted by releasing the fixture.

This invention provides a mounting device comprising a fixture with a fitting groove in which the cylinder tube is fitted, at least one, preferably two, first setting screw for mounting the fixture on the cylinder tube, and a sensor mounting portion.

The width of the mouth of the fitting groove is slightly larger than the diameter of the cylinder tube, and the height of the groove wall is larger than the radius of the cylinder tube. The first setting screws are set in the groove wall close to the groove mouth so as to be movable back and forth. The first setting screws function as a fixation means when they are firmly tightened to pressure-contact their tips against the outer surface of the cylinder tube in order to fix the fixture to the cylinder tube; and as a stopper when they are loosely tightened, their tips then reducing the width of the mouth of the fitting groove in order to prevent the cylinder tube from slipping out of the fitting groove.

The fixture can be simply and reliably fixed to the cylinder tube by firmly tightening the first setting screws to pressure-contact their tips against the outer surface of the cylinder tube. In addition, by slightly tightening the first setting screws so that their tips are slightly separated from the cylinder tube, the width of the opening of the fitting groove is reduced so as to prevent the fixture from slipping off the cylinder tube while enabling the fixture to be moved freely in the circumferential direction of the cylinder tube. As a result, the mounting position of the sensor can be simply adjusted.

According to a specific preferred embodiment, the sensor mounting portion is formed as a sensor groove with an opening narrower than the lateral width of the sensor, and the sensor is anchored in the sensor groove using a second setting screw.

This configuration enables the fixture and sensor to be fixed using separate setting screws, so the mounting position of the sensor can be simply adjusted by releasing the fixation of the fixture without removing the sensor.

Multiple sensor grooves may be provided in the fixture at different circumferential positions of the cylinder tube.

According to another embodiment of this invention, the fixture has a buffer piece interposed between the tips of the first setting screws and the outer surface of the cylinder tube to prevent the first setting screws from directly contacting the cylinder tube.

The invention will now be further described by way of example with reference to the accompanying drawings in which:

FIG. 1 is an exploded perspective view of a first embodiment of this invention.

FIG. 2 is a side view of a fixture.

FIG. 3 is an exploded perspective view of a second embodiment of this invention.

FIG. 4 is a side view of a fixture.

FIG. 5 is a side view of a fixture according to a third embodiment of this invention.

FIG. 6 is a side view of a fixture according to a fourth embodiment of this invention.

FIG. 7 is a side view of FIG. 6.

FIG. 8 is a side view of a fixture according to a fifth embodiment of this invention.

FIG. 9 is a side view of a fixture according to a sixth embodiment of this invention.

FIG. 10 is a side view of a fixture according to a seventh embodiment of this invention.

FIG. 11 is a side view showing a state in which the fixture in FIG. 10 is mounted.

FIG. 12 is a side view of a fixture according to an eighth embodiment of this invention.

FIG. 13 is an exploded perspective view of a ninth embodiment of this invention.

FIG. 14 is an exploded perspective view of a conventional mounting device.

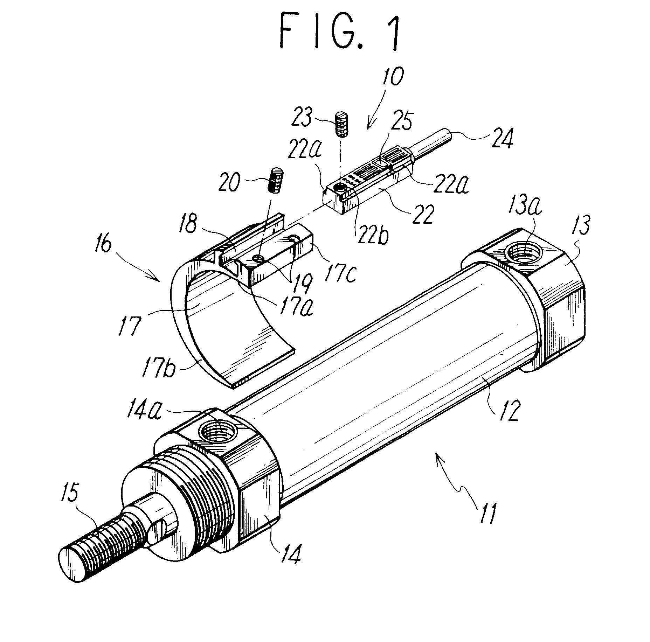

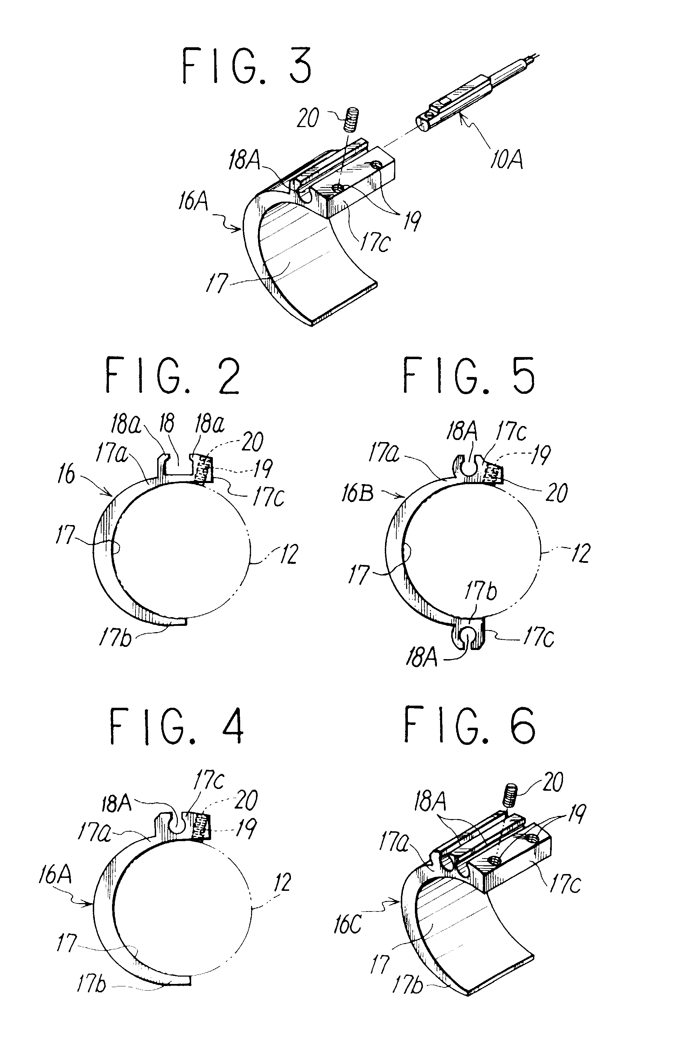

FIGS. 1 and 2 show a first embodiment of a sensor mounting device according to this invention. A cylinder 11 on which a sensor 10 is mounted consists of a cylinder tube 12; and a head cover 13 and a rod cover 14 screwed onto the respective axial ends of the tube. In addition, a piston (not shown) is built into the cylinder tube 12 so as to move back and forth therethrough, and a rod 15 integrated with the piston penetrates the rod cover 14 in an air-tight manner and protrudes from the cover.

When compressed air is supplied to or discharged from a pair of cylinder chambers partitioned by the piston, using ports 13a and 14a provided in the covers 13 and 14 of the cylinder 11, the piston and rod 15 move back and forth. An annular permanent magnet that is detected by the sensor 10 is mounted on the outer circumferential surface of the piston.

The sensor mounting device consists of the sensor 10 and a fixture 16 with which the sensor 10 is mounted on the cylinder tube 12.

The fixture 16 has a fitting groove 17 in which the cylinder tube 12 is fitted; and a sensor mounting portion 18. These components are integrally formed from a non-magnetic material, for example, synthetic resin or aluminum.

The fitting groove 17 has a width slightly larger than the diameter of the cylinder tube 12, and at least one of right and left groove walls 17a and 17b has a height larger than the radius of the cylinder tube 12. Multiple tapped holes 19 are formed in an extension 17c at the opening end of the higher groove wall 17a, and multiple setting screws 20 for fixing the fixture 16 to the cylinder tube 12 are set in the respective tapped holes 19 so as to move toward the approximate center of the cylinder tube 12. The first setting screws 20 function as a fixation means in which they are firmly tightened to pressure-contact their tips against the outer surface of the cylinder tube 12 in order to fix the fixture 16 to the cylinder tube 12; and as a stopper in which they are loosely tightened to allow their tips to reduce the width of the opening of the fitting groove 17 in order to prevent the cylinder tube 12 from slipping out of the fitting groove 17.

The sensor mounting portion 18 consists of a sensor groove in which the sensor 10 can be fitted and mounted. The sensor groove 18 is long and is formed near the extension 17c along the axis of the cylinder tube 12.

The opening of the sensor groove 18 is narrower than the sensor 10, so right and left opening edges 18a, 18a are formed as engagement portions to prevent the sensor 10 from slipping out.

According to the illustrated embodiment, the sensor 10 is configured as a magnetic proximity switch that outputs a signal when approached by a magnet (the detected object). The detected body and sensor, however, are not limited to a magnet and magnetic proximity switch. For example, the detected body may be made of metal and the sensor may be a high-frequency signalling sensor that detects an induced signal in the metal and converts it to an output signal.

A body 22 of the sensor (the magnetic proximity switch) 10 is small enough to be inserted into the sensor groove 18. Shoulders 22a that engage with the opening edges 18a, 18a of the sensor groove are formed on the respective width-wise sides of the sensor, a tapped hole 22b in which a second setting screw 23 is set is formed near one longitudinal end of the body, and a lead 24 is drawn out from the end surface of the sensor opposite the tapped hole 22b. A lamp 25 that allows the operation of the magnetic proximity switch to be visually checked is provided on the top surface of the body.

The sensor 10 is inserted into the sensor groove 18 from the groove end. At an appropriate position, the second setting screw 23 is set in the tapped hole 22b so as to pressure-contact the tip of the screw with the bottom surface of the sensor groove 18, thereby engaging the shoulders 22a, 22a with the opening edges 18a, 18a to fix the sensor at that position. The lead 24 is drawn out from the end of the sensor groove 18.

When the second setting screw 23 is loosened, the shoulders 22b and opening edges 18a, 18a are mutually disengaged to allow the sensor 10 to move to an arbitrary longitudinal position of the sensor groove 18.

When the cylinder tube 12 is fitted in the fitting groove 17 in the fixture 16 in which the sensor 10 is mounted and the first setting screws 20 set in the tapped holes 19 at the tip of the extension 17c are firmly tightened to pressure-contact the tips of the set screws 20 with the outer circumferential surface of the cylinder tube 12, the fixture 16 can be directly mounted on the outer circumferential surface of the cylinder tube 12.

If the first setting screws 20 are loosened so that their tips are slightly separated from the cylinder tube 12, the first setting screws 20 act as stoppers to hold the fixture 16 in order to prevent it from slipping off the cylinder tube 12. In this case, the fixture 16 can be moved freely in both axial and circumferential directions, thereby enabling the mounting position of the sensor to be simply adjusted in both axial and circumferential directions of the cylinder tube 12.

Since the first embodiment sets the first setting screws 20 in the extension 17c formed on the groove wall 17a of the fitting groove 17, at a distance from the groove bottom that is larger than the radius of the cylinder tube 12, even if the first setting screws 20 are loosened, they can function as stoppers to prevent the fixture 16 from slipping off the cylinder tube 12. Therefore, the position of the fixture 16 can be simply and reliably adjusted in both axial and circumferential directions of the cylinder tube 12.

In addition, after the first setting screws 20 have been used to fix the mounting position of the fixture 16 on the cylinder tube 12, the second setting screw 23 can be loosened to move the sensor 10 along the sensor groove 18 in order to adjust the position of the sensor 10 in the axial direction of the cylinder tube 12.

In this case, since the sensor groove 18 is formed close to the extension 17c, the first setting screws 20 for fixing the fixture 16 to the cylinder tube 12 and the second setting screw 23 for anchoring the sensor 10 in the sensor groove 18 can be rotated from the same direction using a tool. In addition, since the mounting position of the sensor 10 can be adjusted while checking whether the lamp 25 is lit, it is easy to change the mounting position of the sensor 10 or to subsequently fine-tune it.

The mounting position of the sensor 10 in the axial direction of the cylinder tube 12 (the moving direction of the piston) must be adjusted more accurately than the circumferential mounting position, but the above embodiment can fine-tune the position of the sensor 10, thereby enabling the mounting position of the sensor 10 to be changed or adjusted easily.

FIGS. 3 and 4 show a second embodiment of this invention. In a fixture 16A according to this embodiment, a sensor groove 18A has a partly cylindrical cross section, and the sensor 10 has a partly cylindrical-cross section that allows it to be loosely inserted into the sensor groove 18A.

The other aspects of the configuration and operation of the second embodiment are the same as in the first embodiment, so the same major components in the figure have the same reference numerals and their detailed description is omitted.

FIG. 5 shows a third embodiment of the mounting device according to this invention. The fixture 16B according to the third embodiment includes extensions 17c at the respective ends of groove walls 17a and 17b of the fitting groove 17. The extension 17c of one of the groove walls 17a has a sensor groove 18A with a partly cylindrical cross section and the tapped holes 19 in which the first setting screws 20 are set, while the extension 17c of the other groove wall 17b has only the sensor groove 18A.

In the fixture 16B, the sensor 10A can be mounted in either or both of the sensor grooves 18A.

The other aspects of the configuration and operation of the third embodiment are the same as in the first embodiment, so their detailed description is omitted.

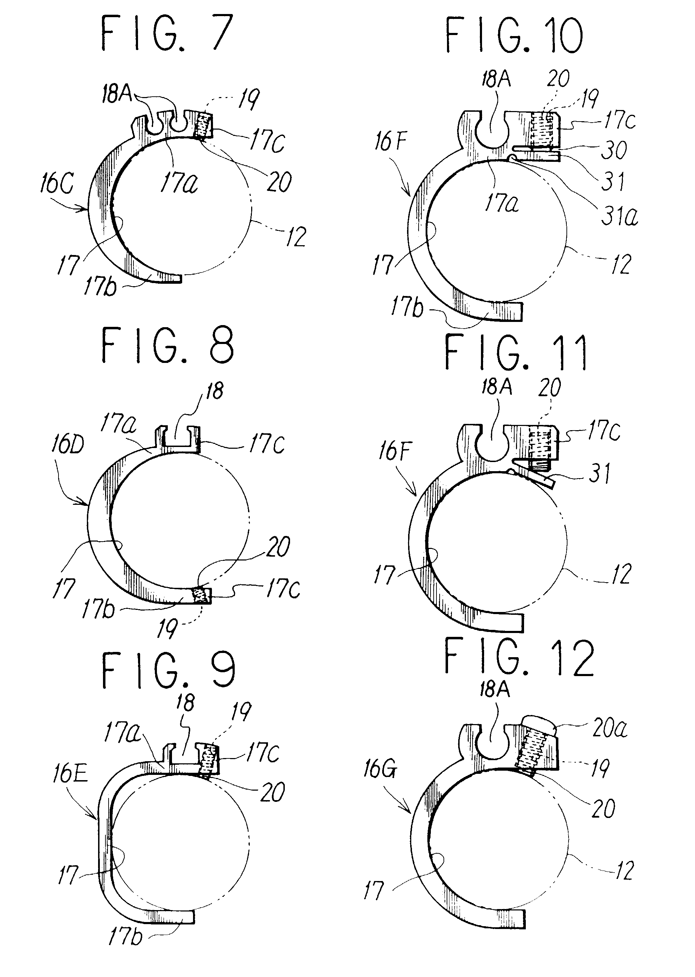

FIGS. 6 and 7 show a fourth embodiment. In a fixture 16C according to this embodiment, two parallel sensor grooves 18A with a partly cylindrical cross section are formed in the extension 17c of one of the groove walls 17a.

The other aspects of the configuration and operation of the fourth embodiment are the same as in the first embodiment except that the sensor 10 can be mounted in either of the two sensor grooves 18A, so their detailed description is omitted.

Although in the third and fourth embodiments, the sensor groove 18A is partly cylindrical, it may be rectangular as in the first embodiment.

FIG. 8 shows a fifth embodiment of this invention. A fixture 16D according to the fifth embodiment has the extensions 17c at the respective opening ends of the groove walls 17a and 17b of the fitting groove 17, and the rectangular sensor groove 18 is formed in the extension 17c of one of the groove walls 17a, while the tapped holes 19 in which the first setting screws 20 are set are formed in the extension 17c of the other groove wall 17b.

The other aspects of the configuration and operation of the second embodiment are the same as in the first embodiment, so their detailed description is omitted.

FIG. 9 shows a sixth embodiment. A fixture 16E according to the sixth embodiment differs from each of the above embodiments having the circular fitting groove 17 in that it has a rectangular fitting groove 17.

The other aspects of the configuration and operation of the sixth embodiment are the same as in the first embodiment, so the same major components in the figure have the same reference numerals and their detailed description is omitted.

The fifth and sixth embodiments can have a partly cylindrical sensor groove 18A instead of the rectangular sensor groove 18, and several such sensor grooves can be provided.

FIGS. 10 and 11 show a seventh embodiment in which the tips of the first setting screws 20 do not directly abut the cylinder tube 12. A notch 30 is provided to partly separate the extension 17c formed on one of the groove walls 17a of a fixture 16E in order to provide a buffer piece 31 that is interposed between the tips of the first setting screws 20 and the outer surface of the cylinder tube 12 to prevent the screws 20 from abutting the cylinder tube 12. The buffer piece 31 can be elastically deformed using a notch 31a provided in the base.

When the first setting screws 20 are tightened, the buffer piece 31 is elastically deformed so as to pressure-contact the outer circumference of the cylinder tube 12 (see FIG. 11), whereas when the first setting screws 20 are loosened, the buffer piece returns to its original condition due to its elasticity.

In a fixture 16F according to the seventh embodiment, the buffer piece 31 prevents the tips of the first setting screws 20 from directly pressure-contacting the outer circumferential surface of the cylinder tube 12, thereby preventing the outer surface of the cylinder tube 12 from being damaged due to excessive tightening.

FIG. 12 shows an eighth embodiment. According to the eighth embodiment, the first setting screw 20 that is set in the tapped hole 19 in a fixture 16G has a head 20a that prevents the setting screw 20 from being excessively tightened against the cylinder tube 12.

The other aspects of the configuration and operation of the seventh and eighth embodiments are the same as in the first embodiment, so their detailed description is omitted.

In these embodiments, the cross section of the sensor groove may also be rectangular or partly cylindrical and multiple sensor grooves may be provided.

FIG. 13 shows a ninth embodiment of this invention. A fixture 16H according to the ninth embodiment has a length almost equal to the axial length of the cylinder tube 12 of the cylinder 11. The configuration of the fixture 16H is the same as that of the fixture 16 in the first embodiment, except that their axial lengths are different. Thus, the same major components in the figure have the same reference numerals and their detailed description is omitted.

The fixture 16H according to the ninth embodiment only requires that the mounting position in the circumferential direction of the cylinder tube 12 be adjusted, and the second setting screw can be used to adjust the position of the sensor 10 in the axial direction of the cylinder tube 12.

As described above, this invention can simply and reliably mount the sensor on the cylinder tube, and enables the mounting position of the sensor to be simply adjusted in both axial and circumferential directions.

In addition, since the sensor and the fixture for fixing the sensor to the cylinder tube are fixed using the separate setting screws, the mounting position of the sensor can be simply adjusted by releasing the fixation of the fixture.

## Claims

1. A device for mounting a sensor for detecting the operating position of a piston in a fluid pressure cylinder, the device comprising a fixture by which the sensor is mounted on the outer surface of a cylinder tube of the cylinder, the fixture defining a fitting groove in which the cylinder tube is received, at least one first setting screw for mounting the fixture on the cylinder tube, and a sensor mounting portion to which a sensor is mounted, the fitting groove having a mouth width slightly larger than the diameter of the cylinder tube and a depth greater than the radius of the cylinder tube, the first setting screw being set in the groove wall at a position close to the groove mouth and being movable back and forth such that the tip moves towards and away from the outer surface of the cylinder tube, the first setting screw acting as a fixation means in a first position in which the tip is in pressure-contact against the outer surface of the cylinder tube and fixes the fixture to the cylinder tube and as a stop means in a second position in which the tip serves to reduce the width of the mouth of the fitting groove sufficiently to prevent removal of the cylinder tube from the fitting groove.

2. A mounting device as claimed in Claim 1 wherein the sensor mounting portion comprises a sensor groove having an opening narrower than the sensor, wherein the sensor groove extends in a direction parallel to the axis of the cylinder tube, and wherein at least one second setting screw is provided which extends in use through the sensor and can be tightened so that its tip is in pressure-contact with the bottom of the sensor groove to fix the sensor.

3. A mounting device as claimed in Claim 2 wherein multiple sensor grooves are provided in the fixture at different circumferential positions around the cylinder tube.

4. A mounting device as claimed in any preceding Claim further comprising a buffer piece interposed between the tips of the first setting screw and the outer surface of the cylinder tube to prevent the first setting screw from directly contacting the cylinder tube.
